# EUROPEAN PATENT APPLICATION

(11) **EP 4 521 809 A1**
(43) Date of publication of application: **12.03.2025**
(21) Application number: 24198907.8
(22) Date of filing: 06.09.2024
(51) Int. Cl.: H04W 24/06, H04W 24/08

(54) **A METHOD FOR CONFIGURING ORTHOGONAL CHANNEL NOISE GENERATION OVER L2-L1 INTERFACE**

(30) Priority: 07.09.2023 IN 202321060284; 03.09.2024 US 202418823121
(71) Applicant: Mavenir Systems, Inc., Richardson, TX 75081 (US)
(72) Inventor: LOURDU RAJA, Charles Santhosam, 560048 Bangalore (IN); SANGAL, Sapna, 560037 Bangalore (IN)
(74) Representative: Studio Torta S.p.A.

(57) **Abstract**

A method of implementing Orthogonal Channel Noise (OCN) testing in a wireless network for fully loaded conditions in the absence of actual user equipment (UE) loads, said wireless network including a radio unit (RU), a Layer 1 module, and a Layer 2 module connected to the Layer 1 module over a message-based interface, the method comprising: sending, by the Layer 2 module, OCN parameters to the Layer 1 module via a Downlink Transmission Time Interval request (DL_TTI.request) message; and configuring, by the Layer 1 module, the RU using the OCN parameters. In the method, i) the *DL_TTI.request* message contains *isOCNsConfigured* parameter; and ii) in the case the *isOCNsConfigured* parameter is set to TRUE, then the *DL_TTI.Request* message additionally contains OCNs configuration (*OCNsConfig*) information.

## Description

### BACKGROUND OF THE DISCLOSURE

### 1. Field of the Disclosure

The present disclosure is related to 4G, 5G New Radio (NR) and 6G wireless networks, and relates more particularly to Orthogonal Channel Noise (OCN) generation.

### 2. Description of the Related Art

Orthogonal Channel Noise simulator provides a dummy load generation for the unused resource elements (REs) of a carrier. Orthogonal Channel Noise (OCN) is used for simulating a loaded cell conditions in the field or in a lab when the available Physical Resource Blocks (PRBs) are not fully utilized by the connected users at a given time. This can be used by network operators or test labs to simulate a fully loaded cell site conditions even when there are not many real customers..

OCN can be used to simulate a fully loaded cell condition, thereby enabling checking of the performance of the Open Radio Access Network Radio Unit (O-RU) in the scenario when cells are not actually fully loaded. Basic performance impacts at full transmission (TX) power and passive intermodulation (PIM) impacts can be verified in the field environment. This is useful for radio frequency (RF) optimizations under loaded conditions, without requiring actual user loading. For simulating conditions at the O-RU, Layer2 (L2) needs to send configuration to Layer1 (L1), which in turn will send it to the O-RU.

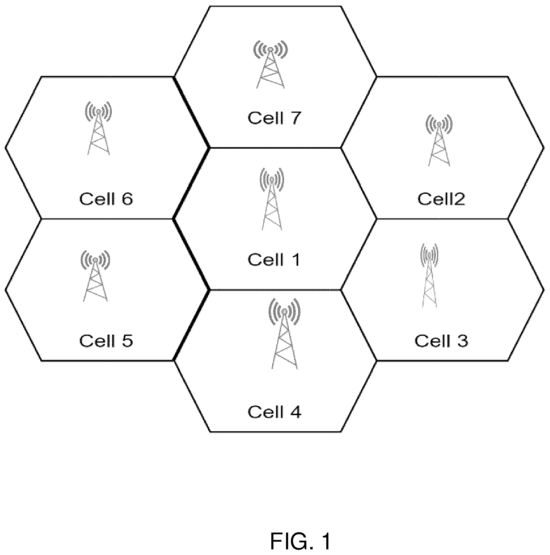

FIG. 1 illustrates an example cell deployment scenario for usage of OCNs. FIG. 1 shows seven cells, i.e., Cell 1 through Cell 7. If interference on Cell 1 due to other neighboring cells (i.e., Cell 2 through Cell 7) needs to be measured, then Cell 2 through Cell 7 will be configured with OCNs parameters, if these cells are not loaded fully. This will cause maximum interference possible on Cell 1, and hence even without real user equipments (UEs) present, loading conditions can be verified.

Current structures defined in Small Cell Forum (SCF) Functional Application Platform Interface (FAPI) standard v7 document does not have any information for OCNs configuration so that physical layer (PHY) can simulate the loading conditions on the RU, e.g., which physical resource block (PRB) is to be considered as loaded, etc., even when UEs are not actually present.

Therefore, a need exists to provide interface improvements in L2-to-L1 transmission to carry the information of PRBs, power, etc., that has to be considered for interference measurement.

### SUMMARY OF THE DISCLOSURE

The present disclosure provides interface improvements in L2-to-L1 transmission to carry the information of PRBs, power, etc., that has to be considered for interference measurement. This information will be passed only in downlink direction, hence changes are proposed in Downlink Transmission Time Interval request (DL_TTI.request) message in SCF FAPI standard.

In an example embodiment according to the present disclosure, the OCNs parameters are sent from L2 to L1, and based on the received parameters, L1 can configure the RU and implement the fully-loaded scenario for a neighboring cell which is measuring the interference.

In an example embodiment according to the present disclosure, L2 and L1 can be implemented as software modules running on DU (e.g., O-DU) component of gNodeB (gNB).

### BRIEF DESCRIPTION OF THE DRAWINGS

FIG. 1 illustrates an example cell deployment scenario for usage of OCNs.
FIG. 2 illustrates an example method of implementing OCNs configuration involving L2 and L1.

### DETAILED DESCRIPTION

In an example embodiment according to the present disclosure, the OCNs parameters are sent from L2 to L1, and based on the received parameters, L1 can configure the RU and implement the fully-loaded scenario for a neighboring cell which is measuring the interference. As an example, L2 and L1 can be implemented as software modules running on DU (e.g., O-DU) component of gNodeB (gNB).

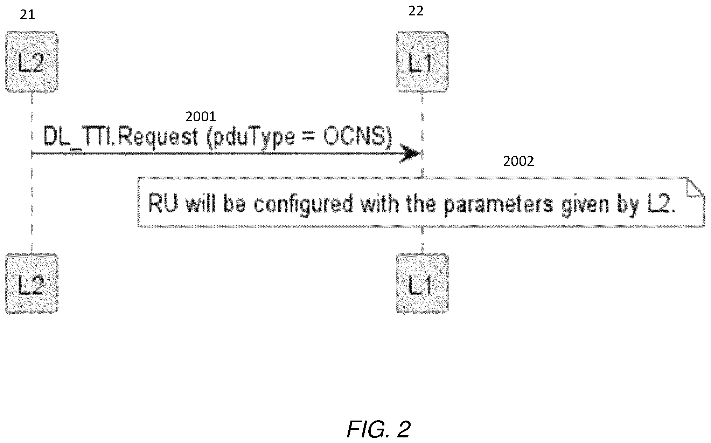

FIG. 2 illustrates an example method of implementing OCNs configuration involving L2 and L1. As referenced by the process arrow 2001, L2 21 sends DL_TTI.request message (protocol data unit (PDU) type being OCNs) to L1 22. Next, referenced by 2002, L1 22 will configure the RU (e.g., O-RU) with OCNs configuration parameters contained in the DL_TTI.request message.

According to an example embodiment, the DL_TTI.request message structure (shown below) is modified to contain OCNs configuration parameters to be transmitted from L2 to L1:
**DL_TTI.request:**

| Field | Type | Description |
|---|---|---|
| isOCNsConfigured | Uint8_t | Indicates if OCN configuration is sent in DL_TTI.Request. |
| | | True: next structure containing the OCNs parameter will be present. L1 need to decode the same and configure RU accordingly. |
| | | False: OCNs parameters are not present hence next structure will be missing. |
| OCNsConfig | Structure | Contains the OCNs parameters. Structure is defined below in **Errore. L'origine riferimento non è stata trovata**. structure. |

Components of OCNsConfig structure (included in the DL_TTI.request message) is shown in Table 1 below:

**TABLE 1: OCNConfig structure**

| **Field** | | **Type** | |
|---|---|---|---|
| Each BWPPart information | | | |
| nrOfBwpPart | | uint8_t | Number of bandwidth parts (BWPs) in which OCNs needs to be monitored. |
| | | | Value: 1 -> 8 |

| For each Bwp Part{ | | | |
|---|---|---|---|
| | bwp-Size | uint16_t | this field signals the bandwidth part (BWP) size, e.g., as per 3GPP TS 38.213, sec 12. Number of contiguous PRBs allocated to the BWP. Value: 1->275 |
| | bwp-Start | Uint16_t | this field signals the bandwidth part start RB index from reference CRB, as per 3GPP TS 38.213, sec. 12. |
| | | | Value: 0->274 |
| | subcarrierSpacing | uint8_t | subcarrierSpacing, e.g., as per 3GPP TS 38.211, sec 4.2. |
| | | | Value:0->4 |
| | Modulation | Uint8_t | Modulation scheme to be used. Value |
| | | | 0 → QPSK |
| | | | 1 → 16 QAM |
| | | | 2 → 64 QAM |
| | | | 3 → 256 QAM |
| | rb-Bitmap | uint8_t [36] | This parameter is an array of type Uint8 which has 36 elements, i.e., 36 *8 = 288 bits. 3GPP TS 38.212, section 7.3.1.2.2 bitmap of RBs, 273 rounded up to multiple of 32. This bitmap is in units of virtual resource blocks (VRBs). Least significant bit (LSB) of byte 0 of the bitmap represents the VRB 0, as per section 7.3.1.6 of 3GPP TS 38.211. |
| | startSymbollndex | uint8_t | Start symbol index of PDSCH mapping from the start of the slot, S. As per 3GPP TS 38.214, Table 5.1.2.1-1. |
| | | | Value: 0->13 |

| Field | | Type | |
|---|---|---|---|
| | nrOfSymbols | uint8_t | PDSCH duration in symbols, L. As per 3GPP TS 38.214, Table 5.1.2.1-1 |
| | | | Value: 1->14 |
| | *Precoding and Beamforming* | structure | See, e.g., Table 3-93 of SCF FAPI v7. If the PHY supports Rel-16 see also Table 3-94 of SCF FAPI v7. For PHYs supporting FAPIv4 MU-MIMO groups, see also Table 3-95 of SCF FAPI v7. Can include specific beamforming weights and beam identifier (ID) to be applied for OCN signals on specified PRBs. |
| | powerControlOffsetProfileNR | uint8_t | Ratio of PDSCH EPRE to NZP CSI-RS EPRE. As per 3GPP TS 38.214, sec 5.2.2.3.1. |
| | | | |
| | | | Values: |
| | | | 0->23: |
| | | | representing -8 to 15 dB in 1dB steps |
| | | | 255: L1 is configured with ProfileSSS |
| | powerControlOffsetSSProfileNR | uint8_t | Ratio of NZP CSI-RS EPRE to SSB/PBCH block EPRE. As per 3GPP TS 38.214, sec 5.2.2.3.1 |
| | | | |
| | | | Values: |
| | | | 0: -3dB, |
| | | | 1: 0dB, |
| | | | 2: 3dB, |
| | | | 3: 6dB |
| | | | 255: L1 is configured with ProfileSSS |
| } | | | |

Shown below is an example involving four slots for PDSCH and OCNs configuration sent from L2 to L1:

| | 60% Loaded | 10% Loaded | No Scheduling | |
|---|---|---|---|---|
| RBs | Slot0 | Slot1 | Slot2 | Slot3 |
| 0 | | | | |
| 1 | | | | |
| 2 | | PDSCH | | |
| 3 | | | | |
| 4 | | | | |
| 5 | | | | |
| 6 | | | | |
| 7 | | | | |
| 8 | | | | |
| 9 | | | | |
| 10 | | | | |
| 11 | | | | |
| 12 | | | | PDSCH |
| 13 | | | | |
| 14 | PDSCH | | | |
| 15 | | | | |
| 16 | | | | |
| 17 | | | | |
| 18 | | | | |
| 19 | | | | |
| 20 | | | | |
| 21 | | | | |
| 22 | | | | |
| 23 | OCNS | OCNS | | OCNS |
| 24 | RBs | RBs | OCNS | RBs |

In this example, 25 PRBs (RB0 to RB24) are assumed to be available for PDSCH transmission, and Slot 0 through Slot 3 are scheduled as follows:
A) Slot 0:
   PDSCH is scheduled for first 60% of resources (15 RBs, i.e., RB0 to RB14, on all 13 symbols).
   RBBitmap in OCNsConfig will be set from RB15 to RB 24 on all 13 symbols for loading.
B) Slot 1:
   PDSCH is scheduled for first 12% of available resources (3 RBs, i.e., RB0 to RB2, on all 13 symbols).
   RBBitmap in OCNsConfig will be set from RB3 to RB24 on all 13 symbols to make it fully loaded condition.
C) Slot 2:
   No PDSCH is scheduled, hence RBBitmap in OCNsConfig will be set from RB0 to RB 24 on all 13 symbols for simulating fully loaded condition.
D) Slot 3:
   PDSCH is scheduled for 52% of available resources (13 RBs, RB0 to RB12, on all 13 symbols).
   RBBitmap in OCNsConfig will be set from RB13 to RB24 on all 13 symbols to make it fully loaded condition.

The example method according to the present disclosure enables simulation testing of wireless networks for fully loaded conditions even when actual UEs are present, which simulation testing will not require any changes in the 3GPP-defined procedures.

The techniques described herein are exemplary and should not be construed as implying any limitation on the present disclosure. Various alternatives, combinations and modifications could be devised by those skilled in the art. For example, although the present disclosure has been described in the context of 4G, 5G NR and 6G wireless networks, the present disclosure is equally applicable to any wireless system. In addition, operations associated with the processes described herein can be performed in any order, unless otherwise specified or dictated by the operations themselves. The present disclosure is intended to embrace all such alternatives, modifications and variances that fall within the scope of the appended claims.

The terms "comprises" or "comprising" are to be interpreted as specifying the presence of the stated features, integers, operations or components, but not precluding the presence of one or more other features, integers, operations or components or groups thereof. The terms "a" and "an" are indefinite articles, and as such, do not preclude embodiments having pluralities of articles.

For the sake of completeness, the following list of acronyms is provided:

### Acronyms

CRB: Common Resource Block
CSI-RS: Channel State Information Reference Signal
EPRE: Energy Per Resource Element
MU-MIMO: Multi-user, Multiple-Input, Multiple-Output
NZP: non-zero-power
PBCH: Physical Broadcast Channel
PDSCH: Physical Downlink Shared Channel
RB: Resource Block
SSB: Synchronization Signal Block
SSS: Secondary Synchronization Signal UE: user equipment
UE: User Equipment

## Claims

1. A method of implementing Orthogonal Channel Noise (OCN) testing in a wireless network for fully loaded conditions in the absence of actual user equipment (UE) loads, said wireless network including a radio unit (RU), a Layer 1 module, and a Layer 2 module connected to the Layer 1 module over a message-based interface, the method comprising:
sending, by the Layer 2 module, OCN parameters to the Layer 1 module via a Downlink Transmission Time Interval request *(DL_TTI.request)* message; and
configuring, by the Layer 1 module, the RU using the OCN parameters.

2. The method of claim 1, wherein:
i) the *DL_TTl.request* message contains *isOCNsConfigured* parameter; and
ii) in the case the *isOCNsConfigured* parameter is set to TRUE, then the *DL_TTI.Request* message additionally contains OCNs configuration (*OCNsConfig*) information.

3. The method according to claim 2, wherein the Layer 1 module uses the *OCNsConfig* information to generate OCN on selected physical resource blocks (PRBs) using a bitmap.

4. The method according to claim 2, wherein the *OCNsConfig* information contains subcarrier spacing information to be used by the Layer 1 module for generation of OCN.

5. The method according to claim 2, wherein the *OCNsConfig* information contains power offset over synchronization signal block (SSB) channel to be used for resource elements (REs) carrying OCN signal.

6. The method according to claim 2, wherein the *OCNsConfig* information contains specification of at least one bandwidth part (BWP) on which OCN is to be transmitted, said specification of the at least one BWP including a size and start resource block (RB) for the BWP.

7. The method according to claim 2, wherein the *OCNsConfig* information contains start symbol and number of symbols over which OCN is to be transmitted.

8. The method according to claim 2, wherein the *OCNsConfig* information contains at least one of specific beamforming weights and beam identifier (ID) to be applied for OCN signals on specified PRBs.

9. The method according to claim 2, wherein the *OCNsConfig* information specifies a number of BWPs in which OCN is to be transmitted.

10. The method according to claim 2, wherein the *OCNsConfig* information contains a ratio of Physical Downlink Shared Channel (PDSCH) Energy Per Resource Element (EPRE) to non-zero-power (NZP) Channel State Information Reference Signal (CSI-RS) EPRE.

11. The method according to claim 9, wherein the *OCNsConfig* information contains specification of at least one bandwidth part (BWP) on which OCN is to be transmitted, said specification of the at least one BWP including a size and start resource block (RB) for the BWP.

12. The method according to claim 10, wherein the *OCNsConfig* information contains subcarrier spacing information to be used by the Layer 1 module for generation of OCN.

13. The method according to claim 10, wherein the *OCNsConfig* information contains power offset over synchronization signal block (SSB) channel to be used for resource elements (REs) carrying OCN signal.

14. The method according to claim 10, wherein the *OCNsConfig* information contains specification of at least one bandwidth part (BWP) on which OCN is to be transmitted, said specification of the at least one BWP including a size and start resource block (RB) for the BWP.

15. The method according to claim 10, wherein:
i) the *OCNsConfig* information contains start symbol and number of symbols over which OCN is to be transmitted; and/or
ii) the *OCNsConfig* information contains at least one of specific beamforming weights and beam identifier (ID) to be applied for OCN signals on specified PRBs.
